# EUROPEAN PATENT SPECIFICATION

(11) **EP 2 693 589 B1**
(45) Date of publication and mention of the grant of the patent: **25.02.2015**
(21) Application number: 12178689.1
(22) Date of filing: 31.07.2012
(51) Int. Cl.: H02J 3/16, F03D 7/02, H02J 3/38

(54) **Wind park control system**
Windpark-Steuerungssystem
Système de commande de parc éolien

(43) Date of publication of application: 05.02.2014
(73) Proprietor: Siemens Aktiengesellschaft, 80333 München (DE)
(72) Inventor: Bech, John, 8450 Hammel (DK)

(56) References cited:
- EP-A1- 2 221 957
- US-A1- 2009 218 817
- US-A1- 2010 025 994

## Description

### Field of invention

The present invention relates to the technical field of wind parks. In particular, the present invention relates to a control system for a wind park, in particular controlling the reactive power output of each wind turbine in the wind park.

### Art Background

Wind parks comprise a plurality of single wind turbines and provide power to a utility grid. Today utility grids require reactive power delivery/consumption from wind power plants or parks. The reactive power may be needed for instance by loads (like electrical motors). Modern wind turbines may be able to control their reactive power output. Thus, the reactive power requirement of the utility grid may be fulfilled.

Typically, all wind turbines deliver or consume reactive power based on the same reference. Thereby, all wind turbines contribute with almost the same amount of reactive power. All wind turbines provide electrical loss to the overall system, however, some wind turbines give more electrical loss than other.

EP 2 221 957 A1 discloses a method for controlling a plurality of wind turbines. Thereby, reactive-power command values corresponding to individual wind turbines are determined by correcting a predetermined reactive-power command value for an interconnection node using reactive power correction levels set for the individual wind turbines. Rates of change determined for the individual wind turbines are stored in a memory of a central controller and are used for correcting the reactive-power command value in the operation of the wind turbines. The central controller (a) detects the actual reactive power at the interconnection node, (b) calculates the difference between the actual reactive power and the reactive-power command value, (c) calculates new reactive-power command values so as to offset the difference and provides them as the next reactive-power command values to the respective wind turbines.

Therefore, there may be a need for an efficient and reliable control of the reactive power of the wind park to ensure that overall requirements are fulfilled and electrical losses are minimized.

### Summary of the Invention

This need may be met by the subject matter according to the independent claims. Advantageous embodiments of the present invention are described by the dependent claims.

According to a first aspect of the invention, there is provided a wind park control system for controlling a reactive power output of a plurality of wind turbines of a wind park, wherein the wind park is adapted to deliver active power and reactive power to a utility grid. The wind park control system comprises a determination unit being adapted to determine a total amount of reactive power being required by the utility grid (which corresponds to receiving information from the utility grid being indicative for the total amount of reactive power being required by the utility grid) and being adapted to determine for each wind turbine an individual amount of reactive power, which the wind turbine is capable to deliver, a calculation unit being adapted to calculate a capability scheme, wherein the capability scheme comprises an order for the plurality of wind turbines according to which order the wind turbines are selected for delivering reactive power, wherein the capability scheme is calculated based on the determined individual amount of reactive power of each wind turbine and the total electrical power loss being contributed by each connection of all the wind turbines to the utility grid, and an adjustment unit being adapted to adjust an actual amount of reactive power to be provided by the plurality of wind turbines, wherein the reactive power output of each wind turbine is controlled based on the calculated capability scheme wherein the wind turbines are selected for delivering reactive power in the order of the capability scheme, such that the determined total amount of reactive power is fulfilled.

A wind park may comprise a plurality of wind turbines for delivering power to a utility grid. A wind turbine may be used for generating electrical power by converting wind into electrical power. Typically, wind turbines comprise a tower, a wind turbine rotor, which is arranged at a top portion of the tower and which comprises at least one blade, and a generator being mechanically coupled with the wind turbine rotor.

Based on an input power, the wind, the generator is able to convert the input power into electrical output power. The utility grid, to which power may be delivered, may have some requirements, in particular reactive power requirements, which should be fulfilled. These requirements may be provided to the wind park control system, in particular the determination unit. The utility grid may have specific requirements for the reactive power. The requirements for delivery/consumption of reactive power from the wind park or wind power plant may be either reactive power, power factor or voltage control.

To reduce the electrical losses, which may occur caused by the connection between a wind turbine and the connection point of the wind park and the utility grid, wind turbines contributing less electrical loss may be preferred for providing or delivering reactive power. The wind turbines may be selected according to the electrical loss they contribute and according to the amount of reactive power they may provide. The wind turbines may be selected in a number or amount sufficient for fulfilling the requirements for reactive power of the utility grid. Thus, the reactive power of the wind turbines may be accumulated.

The determination unit and the calculation unit may be integrated as one single unit. The plurality of wind turbines may be at least two wind turbines.

According to an embodiment of the invention, the determination unit is adapted to determine the individual amount of reactive power for each wind turbine based on a generated active power and a voltage at the wind turbine.

According to this embodiment, the reactive power each wind turbines is capable to deliver may be determined first. The determination may be based on an actual voltage and an actual active power generated at the wind turbine.

According to a further embodiment of the invention, the order of the wind turbines in the capability scheme is based on priorities, wherein a wind turbine having a connection with the lowest electrical loss has the highest priority. Thus, the wind turbine having the minimum electrical collector network power loss from all the wind turbines may have the highest priority.

The capability scheme may comprise a table wherein the wind turbines are arranged in an order corresponding to the amount of electrical loss they are providing. Hereby, the wind turbine contributing the lowest electrical loss may have the highest priority, wherein a wind turbine contributing more electrical loss may have a lower priority.

According to a further embodiment of the invention, the determination unit is adapted to determine the electrical losses based on a resistance being provided by the connection and a current being associated with the reactive power of the wind turbine.

The electrical loss each wind turbine is contributing may be determined based on characteristics of the connection. Each connection may have a specific resistance. The electrical loss may be calculated by the resistance of the connection multiplied with a current squared, wherein the current may consist of two parts, active current and reactive current. The current may be associated with the reactive power of the wind turbine.

According to a further embodiment of the invention, the order of the wind turbines in the capability scheme is based on priorities, wherein a priority is associated with the resistance being provided by the corresponding connection such that a low resistance is associated with a high priority.

The capability scheme may comprise a table wherein the wind turbines are arranged in an order corresponding to the amount of resistance of the corresponding connection. Hereby, the wind turbine having the connection with the lowest resistance may have the highest priority, wherein a wind turbine having a connection with a higher resistance may have a lower priority.

According to a further embodiment of the invention, the determination unit is further adapted to determine for each wind turbine an individual amount of reactive power, which the wind turbine is capable to consume, and the calculation unit is adapted to calculate the capability scheme based on the determined individual amount of reactive power of each wind turbine, which each wind turbine is capable to deliver and/or consume.

In addition to the capability of delivering reactive power, the determination unit may also determine the capability of each wind turbine to consume reactive power. The capability scheme may in this case comprise information about the capability of delivering and consuming reactive power for each wind turbine.

According to a further embodiment of the invention, the adjustment unit is further adapted to adjust the actual amount of reactive power to be provided by the plurality of wind turbines by controlling the reactive power output of each wind turbine based on the calculated capability scheme such that the wind turbines are selected for delivering and/or consuming reactive power to fulfill the determined total amount of reactive power.

In addition to delivering reactive power, each wind turbine may also consume reactive power. This may be used for adjusting the reactive power being needed by the utility grid.

According to a further aspect of the invention, a wind park is provided. The wind park comprises a wind park control system having the above mentioned features and a plurality of wind turbines being controllable by the wind park control system.

The wind park control system may be located near the wind turbines or may be located remote. Further, the wind park control system may be comprised by single units, each unit being located near a wind turbine.

According to a further aspect of the invention, a method for controlling a reactive power output of a plurality of wind turbines of a wind park is provided, wherein the wind park is adapted to deliver active power and reactive power to a utility grid. The method comprises determining, by a determination unit, a total amount of reactive power being required by the utility grid and determining for each wind turbine an individual amount of reactive power, which the wind turbine is capable to deliver, calculating, by a calculation unit, a capability scheme, wherein the capability scheme comprises an order for the plurality of wind turbines, according to which order the wind turbines are selected for delivering reactive power, wherein the capability scheme is calculated based on the determined individual amount of reactive power of each wind turbine and the total electrical power loss being contributed by each connection of all the wind turbine to the utility grid, and adjusting, by an adjustment unit, an actual amount of reactive power to be provided by the plurality of wind turbines, wherein the reactive power output of each wind turbine is controlled based on the calculated capability scheme wherein the wind turbines are selected for delivering reactive power in the order of the capability scheme, such that the determined total amount of reactive power is fulfilled.

According to a further aspect of the invention, there is provided a computer program for controlling a reactive power output of a plurality of wind turbines of a wind park, the computer program, when being executed by a data processor, is adapted for controlling the method as described above.

According to a further aspect of the invention, there is provided a computer-readable medium, in which a computer program for controlling a reactive power output of a plurality of wind turbines of a wind park is stored, which computer program, when being executed by a processor, is adapted to carry out or control a method as described above.

As used herein, reference to a computer program is intended to be equivalent to a reference to a program element and/or a computer readable medium containing instructions for controlling a computer system to coordinate the performance of the above described method.

The computer program may be implemented as computer readable instruction code by use of any suitable programming language, such as, for example, JAVA, C++, and may be stored on a computer-readable medium (removable disk, volatile or nonvolatile memory, embedded memory/processor, etc.). The instruction code is operable to program a computer or any other programmable device to carry out the intended functions. The computer program may be available from a network, such as the World Wide Web, from which it may be downloaded.

The herein disclosed subject matter may be realized by means of a computer program respectively software. However, the herein disclosed subject matter may also be realized by means of one or more specific electronic circuits respectively hardware. Furthermore, the herein disclosed subject matter may also be realized in a hybrid form, i.e. in a combination of software modules and hardware modules.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this document.

The aspects defined above and further aspects of the present invention are apparent from the examples of embodiments to be described hereinafter and are explained with reference to the examples of embodiment. The invention will be described in more detail hereinafter with reference to examples of embodiment but to which the invention is not limited.

### Brief Description of the Drawings

Figure 1 shows a wind park comprising a wind park control system according to an embodiment of the present invention.
Figure 2 shows a flow diagram for controlling a wind park according to a further embodiment of the invention.
Figure 3 shows a capability scheme according to an embodiment of the invention.
Figure 4 shows a wind park layout according to an embodiment of the invention.

### Detailed Description

The illustration in the drawing is schematically. It is noted that in different figures, similar or identical elements are provided with the same reference signs.

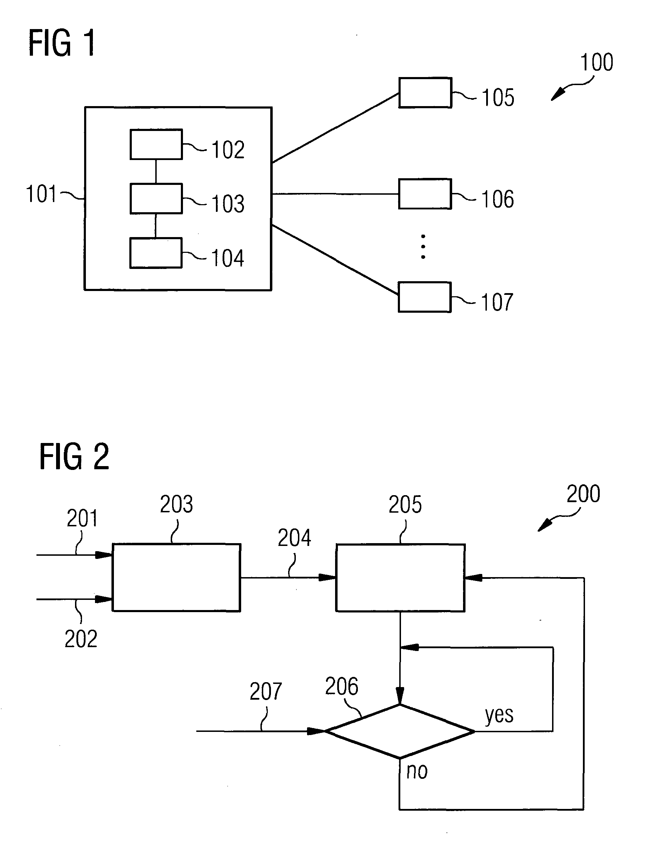

Figure 1 shows a wind park 100. The wind park 100 comprises a wind park control system 101 and a plurality of wind turbines 105, 106, 107. The wind park control system is adapted to control a reactive power output of the plurality of wind turbines. The wind park may deliver active power and reactive power to a utility grid (not shown).

The wind park control system comprises a determination unit 102, a calculation unit 103 and an adjustment unit 104. The determination unit 102 is adapted to determine a total amount of reactive power being required by the utility grid. The determination unit is further adapted to determine for each wind turbine an individual amount of reactive power, which the wind turbine is capable to deliver.

The calculation unit 103 is adapted to calculate a capability scheme. The capability scheme comprises an order for the plurality of wind turbines according to which the wind turbines are selected for delivering reactive power. The capability scheme is calculated based on the determined individual amount of reactive power of each wind turbine and an electrical loss occurring due to a connection from each wind turbine to the utility grid.

The adjustment unit 104 is adapted to adjust an actual amount of reactive power to be provided by the plurality of wind turbines. The reactive power output of each wind turbine is controlled based on the calculated capability scheme wherein the wind turbines are selected for delivering reactive power in the order of the capability scheme such that the determined total amount of reactive power is fulfilled.

Figure 2 illustrates a flowchart for the function of the wind park control system. An amount of active power from all wind turbines 201 and an amount of voltage at all wind turbines 202 is provided to the calculation/determination unit 203. In this unit, the capability scheme is calculated and provided 204 to the adjustment unit 205. Here, the reactive power deliver from the wind turbines is adjusted according to the capability scheme. In a next step 206, it is determined whether the reactive power requirements 207 from the utility grid are fulfilled. If yes, it may be repeatedly determined whether the requirements are still fulfilled. If no, the adjustment may be repeated.

To reduce electrical losses in the electrical network of the wind power plant, the capability scheme may be set up so that the wind turbines that give the lowest losses in the network are used first to deliver/consume the reactive power. The capability scheme comprises information so that the turbines being electrical closest to the connection point of the wind farm/park to the utility grid are first used to deliver/consume the reactive power required by the utility grid.

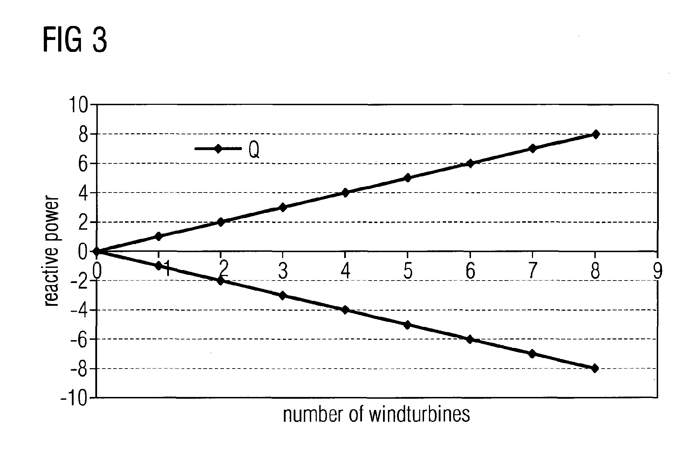

Figure 3 illustrates an example for a capability scheme according to an embodiment of the invention. The scheme is shown for eight wind turbines. On the x-axis, the numbers represent the wind turbines. On the y-axis, the accumulated reactive power from all wind turbines is shown. The wind turbine 1 is electrical closest to the connection point of the wind farm (i.e., contributes the lowest electrical loss) and then wind turbine 2 is the next and so on up to number 8. The wind turbine numbers are where the wind turbine is at their reactive power capacity. It may be assumed that each wind turbine can deliver/consume +/- 1.0 pu (per-unit) reactive power in this example.

For example, if it is required that the wind turbines deliver 4.5 pu reactive power, then wind turbine 1, 2, 3 and 4 have to deliver their full reactive power of 1.0 pu and wind turbine 5 has to deliver 0.5 pu. If there is a change in the reactive power requirement, then the control system should follow the curve to have a jumpless transfer between two reactive power setpoints.

In a real wind farm, the curve of Figure 3 may be generated from information from the wind turbines about their capability to deliver/consume reactive power. This capability may be typically dependent on active power generated and voltage at the wind turbines. The active power and voltage from each wind turbine may be send to the determination/calculation unit, which then calculates the capabilities for deliver/consume reactive power.

The electrical losses in the wind farm network are related to the resistance time the current squared. The current may consist of two parts, one is active current and the other is reactive current. One idea of the present system is to prioritize the reactive current. This means that the reactive current may run through a minimum if resistance. Further, the control system may follow the line of Figure 3 to give a jumpless transfer between two reactive power setpoints. Further, the curve of Figure 3 may be generated from information from the wind turbines about active power generated and voltage. This information may then be used to determine the capability of the wind turbines to deliver/consume reactive power.

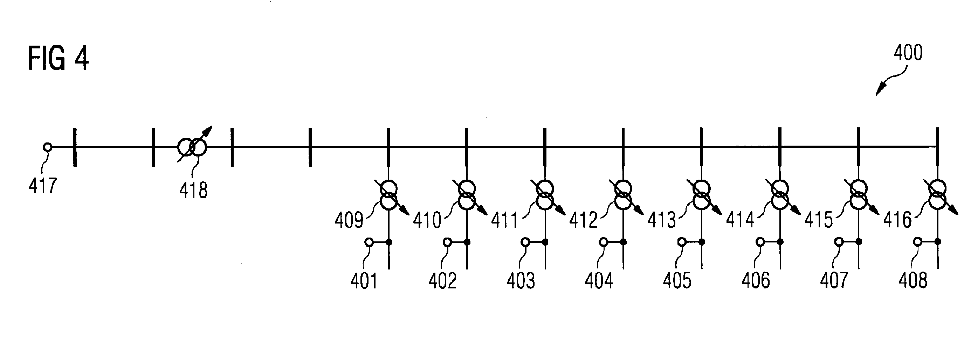

Figure 4 illustrates a further exemplary embodiment of a wind park 400. Eight wind turbines 401 to 408 are connected via transformers 409 to 416 to a common line, for example a cable. A utility grid 417 is connected to the common line via a transformer 418.

In one case, all eight wind turbines may deliver 0.6 MVAr in a normal operation. In a second case, the four wind turbines electrically closest to the delivery point of the grid (i.e., the wind turbines 401 to 404) deliver 1.0 MVAr. The operation in the second case corresponds to the operation as described herein when using the described capability scheme. In both scenarios, the wind turbines deliver 4.0 MVAr in total.

A Weibull wind distribution with factors 2 and 7 may be used to calculate the yearly losses. When comparing the network losses in the two scenarios, the losses are reduced by 125 MWh when using the operation according to the herein described wind park control system.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. A wind park control system (101) for controlling a reactive power output of a plurality of wind turbines (105, 106, 107) of a wind park (100), wherein the wind park is adapted to deliver active power and reactive power to a utility grid (417), the wind park control system (101) comprising
a determination unit (102) being adapted to determine a total amount of reactive power being required by the utility grid (417) and being adapted to determine for each wind turbine (105, 106, 107) an individual amount of reactive power, which the wind turbine (105, 106, 107) is capable to deliver,
a calculation unit (103) being adapted to calculate a capability scheme, wherein the capability scheme comprises an order for the plurality of wind turbines (105, 106, 107) according to which order the wind turbines (105, 106, 107) are selected for delivering reactive power, wherein the capability scheme is calculated based on the determined individual amount of reactive power of each wind turbine (105, 106, 107) and the total electrical power loss being contributed by each connection of all the wind turbines (105, 106, 107) to the utility grid (417), and
an adjustment unit (104) being adapted to adjust an actual amount of reactive power to be provided by the plurality of wind turbines (105, 106, 107), wherein the reactive power output of each wind turbine (105, 106, 107) is controlled based on the calculated capability scheme
**characterized in that**
the wind turbines (105, 106, 107) are selected for delivering reactive power in the order of the capability scheme, such that the determined total amount of reactive power is fulfilled.

2. The wind park control system (101) as set forth in claim 1, wherein the determination unit (102) is adapted to determine the individual amount of reactive power for each wind turbine (105, 106, 107) based on a generated active power and a voltage at the wind turbine (105, 106, 107).

3. The wind park control system (101) as set forth in any one of the preceding claims, wherein the order of the wind turbines (105, 106, 107) in the capability scheme is based on priorities, wherein a wind turbine (105, 106, 107) having a connection with the lowest electrical loss has the highest priority.

4. The wind park control system (101) as set forth in any one of the preceding claims, wherein the determination unit (102) is adapted to determine the electrical losses based on a resistance being provided by the connection and a current being associated with the reactive power of the wind turbine (105, 106, 107).

5. The wind park control system (101) as set forth in claim 4, wherein the order of the wind turbines (105, 106, 107) in the capability scheme is based on priorities, wherein a priority is associated with the resistance being provided by the corresponding connection such that a low resistance is associated with a high priority.

6. The wind park control system (101) as set forth in any one of the preceding claims, wherein the determination unit (102) is further adapted to determine for each wind turbine (105, 106, 107) an individual amount of reactive power, which the wind turbine (105, 106, 107) is capable to consume, and
wherein the calculation unit (103) is adapted to calculate the capability scheme based on the determined individual amount of reactive power of each wind turbine (105, 106, 107), which each wind turbine (105, 106, 107) is capable to deliver and/or consume.

7. The wind park control system (101) as set forth in claim 6, wherein the adjustment unit (104) is further adapted to adjust the actual amount of reactive power to be provided by the plurality of wind turbines (105, 106, 107) by controlling the reactive power output of each wind turbine (105, 106, 107) based on the calculated capability scheme such that the wind turbines (105, 106, 107) are selected for delivering and/or consuming reactive power to fulfill the determined total amount of reactive power.

8. A wind park (100), the wind park (100) comprising
a wind park control system (101) as set forth in any one of the claims 1 to 7, and
a plurality of wind turbines (105, 106, 107) being controllable by the wind park control system (101).

9. A method for controlling a reactive power output of a plurality of wind turbines (105, 106, 107) of a wind park (100), wherein the wind park (100) is adapted to deliver active power and reactive power to a utility grid (417), the method comprising
determining, by a determination unit (102), a total amount of reactive power being required by the utility grid (417) and determining for each wind turbine (105, 106, 107) an individual amount of reactive power, which the wind turbine (105, 106, 107) is capable to deliver,
calculating, by a calculation unit (103), a capability scheme, wherein the capability scheme comprises an order for the plurality of wind turbines (105, 106, 107), according to which order the wind turbines (105, 106, 107) are selected for delivering reactive power, wherein the capability scheme is calculated based on the determined individual amount of reactive power of each wind turbine (105, 106, 107) and the total electrical power loss being contributed by each connection of all the wind turbines (105, 106, 107) to the utility grid (417), and
adjusting, by an adjustment unit (104), an actual amount of reactive power to be provided by the plurality of wind turbines (105, 106, 107), wherein the reactive power output of each wind turbine (105, 106, 107) is controlled based on the calculated capability scheme
**characterized in that**
the wind turbines (105, 106, 107) are selected for delivering reactive power in the order of the capability scheme, such that the determined total amount of reactive power is fulfilled.

10. A computer program for controlling a reactive power output of a plurality of wind turbines (105, 106, 107) of a wind park (100), the computer program, when being executed by a data processor, is adapted for controlling the method as set forth in claim 9.

11. A computer-readable medium, in which a computer program for controlling a reactive power output of a plurality of wind turbines (105, 106, 107) of a wind park (101) is stored, which computer program, when being executed by a processor, is adapted to carry out or control a method as set forth in claim 9.

## Patentansprüche

1. Windpark-Steuerungssystem (101) zur Steuerung einer Blindleistungsabgabe mehrerer Windenergieanlagen (105, 106, 107) eines Windparks (100), wobei der Windpark dazu eingerichtet ist, Wirkleistung und Blindleistung an ein Versorgungsnetz (417) zu liefern, wobei das Windpark-Steuerungssystem (101) umfasst:
eine Bestimmungseinheit (102), die dazu eingerichtet ist, eine Gesamtmenge an Blindleistung zu bestimmen, die von dem Versorgungsnetz (417) benötigt wird, und dazu eingerichtet ist, für jede Windenergieanlage (105, 106, 107) eine Einzelmenge an Blindleistung zu bestimmen, welche die Windenergieanlage (105, 106, 107) zu liefern in der Lage ist,
eine Berechnungseinheit (103), die dazu eingerichtet ist, ein Leistungsfähigkeitsschema zu berechnen, wobei das Leistungsfähigkeitsschema eine Reihenfolge für die mehreren Windenergieanlagen (105, 106, 107) umfasst, gemäß der die Windenergieanlagen (105, 106, 107) für das Liefern von Blindleistung ausgewählt werden, wobei das Leistungsfähigkeitsschema auf der Basis der bestimmten Einzelmenge an Blindleistung jeder Windenergieanlage (105, 106, 107) und des Gesamtverlustes an elektrischer Leistung, zu dem jede Verbindung aller Windenergieanlagen (105, 106, 107) mit dem Versorgungsnetz (417) beiträgt, berechnet wird, und
eine Einstelleinheit (104), die dazu eingerichtet ist, eine Istmenge an Blindleistung, die von den mehreren Windenergieanlagen (105, 106, 107) bereitzustellen ist, einzustellen, wobei die Blindleistungsabgabe jeder Windenergieanlage (105, 106, 107) auf der Basis des berechneten Leistungsfähigkeitsschemas gesteuert wird,
**dadurch gekennzeichnet, dass**
die Windenergieanlagen (105, 106, 107) in der Reihenfolge des Leistungsfähigkeitsschemas für das Liefern von Blindleistung ausgewählt werden, sodass die bestimmte Gesamtmenge an Blindleistung erzielt wird.

2. Windpark-Steuerungssystem (101) nach Anspruch 1, wobei die Bestimmungseinheit (102) dazu eingerichtet ist, die Einzelmenge an Blindleistung für jede Windenergieanlage (105, 106, 107) auf der Basis einer erzeugten Wirkleistung und einer Spannung an der Windenergieanlage (105, 106, 107) zu bestimmen.

3. Windpark-Steuerungssystem (101) nach einem der vorhergehenden Ansprüche, wobei die Reihenfolge der Windenergieanlagen (105, 106, 107) in dem Leistungsfähigkeitsschema auf Prioritäten basiert, wobei eine Windenergieanlage (105, 106, 107), die eine Verbindung mit dem niedrigsten elektrischen Verlust aufweist, die höchste Priorität hat.

4. Windpark-Steuerungssystem (101) nach einem der vorhergehenden Ansprüche, wobei die Bestimmungseinheit (102) dazu eingerichtet ist, die elektrischen Verluste auf der Basis eines Widerstands, den die Verbindung aufweist, und eines Stroms, welcher der Blindleistung der Windenergieanlage (105, 106, 107) zugeordnet ist, zu bestimmen.

5. Windpark-Steuerungssystem (101) nach Anspruch 4, wobei die Reihenfolge der Windenergieanlagen (105, 106, 107) in dem Leistungsfähigkeitsschema auf Prioritäten basiert, wobei eine Priorität dem Widerstand zugeordnet ist, den die entsprechende Verbindung aufweist, sodass ein niedriger Widerstand einer hohen Priorität zugeordnet ist.

6. Windpark-Steuerungssystem (101) nach einem der vorhergehenden Ansprüche, wobei die Bestimmungseinheit (102) ferner dazu eingerichtet ist, für jede Windenergieanlage (105, 106, 107) eine Einzelmenge an Blindleistung zu bestimmen, welche die Windenergieanlage (105, 106, 107) zu verbrauchen in der Lage ist, und
wobei die Berechnungseinheit (103) dazu eingerichtet ist, das Leistungsfähigkeitsschema auf der Basis der bestimmten Einzelmenge an Blindleistung jeder Windenergieanlage (105, 106, 107) zu berechnen, welche jede Windenergieanlage (105, 106, 107) zu liefern und/oder zu verbrauchen in der Lage ist.

7. Windpark-Steuerungssystem (101) nach Anspruch 6, wobei die Einstelleinheit (104) ferner dazu eingerichtet ist, die Istmenge an Blindleistung einzustellen, die durch die mehreren Windenergieanlagen (105, 106, 107) zu liefern ist, indem sie die Blindleistungsabgabe jeder Windenergieanlage (105, 106, 107) auf der Basis des berechneten Leistungsfähigkeitsschemas derart steuert, dass die Windenergieanlagen (105, 106, 107) zum Liefern und/oder Verbrauchen von Blindleistung ausgewählt werden, um die bestimmte Gesamtmenge an Blindleistung zu erzielen.

8. Windpark (100), wobei der Windpark (100) umfasst:
ein Windpark-Steuerungssystem (101) nach einem der Ansprüche 1 bis 7, und
mehrere Windenergieanlagen (105, 106, 107), die durch das Windpark-Steuerungssystem (101) steuerbar sind.

9. Verfahren zur Steuerung einer Blindleistungsabgabe mehrerer Windenergieanlagen (105, 106, 107) eines Windparks (100), wobei der Windpark (100) dazu eingerichtet ist, Wirkleistung und Blindleistung an ein Versorgungsnetz (417) zu liefern, wobei das Verfahren umfasst:
Bestimmen, durch eine Bestimmungseinheit (102), einer Gesamtmenge an Blindleistung, die von dem Versorgungsnetz (417) benötigt wird, und Bestimmen einer Einzelmenge an Blindleistung für jede Windenergieanlage (105, 106, 107), welche die Windenergieanlage (105, 106, 107) zu liefern in der Lage ist,
Berechnen, durch eine Berechnungseinheit (103), eines Leistungsfähigkeitsschemas, wobei das Leistungsfähigkeitsschema eine Reihenfolge für die mehreren Windenergieanlagen (105, 106, 107) umfasst, gemäß der die Windenergieanlagen (105, 106, 107) für das Liefern von Blindleistung ausgewählt werden, wobei das Leistungsfähigkeitsschema auf der Basis der bestimmten Einzelmenge an Blindleistung jeder Windenergieanlage (105, 106, 107) und des Gesamtverlustes an elektrischer Leistung, zu dem jede Verbindung aller Windenergieanlagen (105, 106, 107) mit dem Versorgungsnetz (417) beiträgt, berechnet wird, und
Einstellen, durch eine Einstelleinheit (104), einer Istmenge an Blindleistung, die von den mehreren Windenergieanlagen (105, 106, 107) bereitzustellen ist, wobei die Blindleistungsabgabe jeder Windenergieanlage (105, 106, 107) auf der Basis des berechneten Leistungsfähigkeitsschemas gesteuert wird,
**dadurch gekennzeichnet, dass**
die Windenergieanlagen (105, 106, 107) in der Reihenfolge des Leistungsfähigkeitsschemas für das Liefern von Blindleistung ausgewählt werden, sodass die bestimmte Gesamtmenge an Blindleistung erzielt wird.

10. Computerprogramm zur Steuerung einer Blindleistungsabgabe mehrerer Windenergieanlagen (105, 106, 107) eines Windparks (100), wobei das Computerprogramm, wenn es durch einen Datenprozessor ausgeführt wird, dazu eingerichtet ist, das Verfahren nach Anspruch 9 zu steuern.

11. Computerlesbares Medium, in welchem ein Computerprogramm zur Steuerung einer Blindleistungsabgabe mehrerer Windenergieanlagen (105, 106, 107) eines Windparks (100) gespeichert ist, wobei dieses Computerprogramm, wenn es durch einen Prozessor ausgeführt wird, dazu eingerichtet ist, ein Verfahren nach Anspruch 9 auszuführen oder zu steuern.

## Revendications

1. Système (101) de régulation d'un parc éolien, pour la régulation d'une puissance réactive de sortie d'une pluralité d'éoliennes (105, 106, 107) d'un parc éolien (100), le parc éolien étant adapté pour fournir une puissance active et une puissance réactive à un réseau public (417), le système (101) de régulation d'un parc éolien comprenant :
- une unité de détermination (102), adaptée pour déterminer une quantité totale de puissance réactive requise par le réseau public (417) et étant adaptée pour déterminer, pour chaque éolienne (105, 106, 107), une quantité individuelle de puissance réactive que l'éolienne (105, 106, 107) est capable de fournir,
- une unité de calcul (103), adaptée pour calculer un schéma de capacités, le schéma de capacités comprenant un ordre pour la pluralité des éoliennes (105, 106, 107), ordre selon lequel les éoliennes (105, 106, 107) sont choisies de façon à fournir une puissance réactive, le schéma de capacités étant calculé sur la base de la quantité individuelle déterminée de puissance réactive de chaque éolienne (105, 106, 107), et chaque connexion de l'ensemble des éoliennes (105, 106, 107) au réseau public (417) contribuant à la perte totale d'énergie électrique, et
- une unité d'ajustement (104), adaptée pour ajuster une quantité effective de puissance réactive devant être fournie par la pluralité d'éoliennes (105, 106, 107), la puissance réactive de sortie de chaque éolienne (105, 106, 107) étant régulée sur la base du schéma de capacités calculé,
**caractérisé en ce que** les éoliennes (105, 106, 107) sont choisies de façon à fournir une puissance réactive dans l'ordre du schéma de capacités, de façon à réaliser la quantité totale déterminée de puissance réactive.

2. Système (101) de régulation d'un parc éolien selon la revendication 1, dans lequel l'unité de détermination (102) est adaptée pour déterminer la quantité individuelle de puissance réactive pour chaque éolienne (105, 106, 107) sur la base d'une puissance active générée et d'une tension au niveau de l'éolienne (105, 106, 107).

3. Système (101) de régulation d'un parc éolien selon l'une quelconque des revendications précédentes, dans lequel l'ordre des éoliennes (105, 106, 107) dans le schéma de capacités se fonde sur des priorités, une éolienne (105, 106, 107) ayant une connexion avec la perte électrique la plus basse ayant la priorité la plus élevée.

4. Système (101) de régulation d'un parc éolien selon l'une quelconque des revendications précédentes, dans lequel l'unité de détermination (102) est adaptée pour déterminer les pertes électriques, sur la base d'une résistance fournie par la connexion, et d'un courant associé à la puissance réactive de chaque éolienne (105, 106, 107).

5. Système (101) de régulation d'un parc éolien selon la revendication 4, dans lequel l'ordre des éoliennes (105, 106, 107) dans le schéma de capacités se fonde sur des priorités, une priorité étant associée à la résistance fournie par la connexion correspondante, de telle sorte qu'une faible résistance soit associée à une priorité élevée.

6. Système (101) de régulation d'un parc éolien selon l'une quelconque des revendications précédentes, dans lequel l'unité de détermination (102) est en outre adaptée pour déterminer, pour chaque éolienne (105, 106, 107), une quantité individuelle de puissance réactive que l'éolienne (105, 106, 107) est capable de consommer, et
dans lequel l'unité de calcul (103) est adaptée pour calculer le schéma de capacités sur la base de la quantité individuelle déterminée de puissance réactive de chaque éolienne (105, 106, 107) que chaque éolienne (105, 106, 107) est capable de fournir et/ou de consommer.

7. Système (101) de régulation d'un parc éolien selon la revendication 6, dans lequel l'unité d'ajustement (104) est en outre adaptée pour ajuster la quantité effective de puissance réactive devant être fournie par la pluralité d'éoliennes (105, 106, 107) en régulant la puissance réactive de sortie de chaque éolienne (105, 106, 107) sur la base du schéma de capacités calculé, de telle sorte que les éoliennes (105, 106, 107) sont choisies pour fournir et/ou consommer une puissance réactive dans le but de réaliser la quantité totale déterminée de puissance réactive.

8. Parc éolien (100), le parc éolien (100) comprenant :
- un système (101) de régulation d'un parc éolien selon l'une quelconque des revendications 1 à 7, et
- une pluralité d'éoliennes (105, 106, 107) pouvant être régulées par le système (101) de régulation d'un parc éolien.

9. Procédé de régulation d'une puissance réactive de sortie d'une pluralité d'éoliennes (105, 106, 107) d'un parc éolien (100), dans lequel le parc éolien (100) est adapté pour fournir une puissance active et une puissance réactive à un réseau public (417), le procédé comprenant :
- la détermination, par une unité de détermination (102), d'une quantité totale de puissance réactive requise par le réseau public (417), et la détermination, pour chaque éolienne (105, 106, 107), d'une quantité individuelle de puissance réactive que l'éolienne (105, 106, 107) est capable de fournir,
- le calcul, par une unité de calcul (103), d'un schéma de capacités, le schéma de capacités comprenant un ordre pour la pluralité des éoliennes (105, 106, 107), ordre selon lequel les éoliennes (105, 106, 107) sont choisies pour la fourniture d'une puissance réactive, le schéma de capacités étant calculé sur la base de la quantité individuelle déterminée de puissance réactive de chaque éolienne (105, 106, 107), et chaque connexion de toutes les éoliennes (105, 106, 107) au réseau public (417) contribuant à la perte totale de puissance électrique, et
- l'ajustement, par une unité d'ajustement (104), d'une quantité effective de puissance réactive devant être fournie à la pluralité d'éoliennes (105, 106, 107), la puissance réactive de sortie de chaque éolienne (105, 106, 107) étant régulée sur la base du schéma de capacités calculé,
**caractérisé en ce que** les éoliennes (105, 106, 107) sont choisies pour fournir une puissance réactive dans l'ordre du schéma de capacités, de telle sorte que la quantité totale déterminée de puissance réactive soit réalisée.

10. Programme informatique pour la régulation d'une puissance réactive de sortie d'une pluralité d'éoliennes (105, 106, 107) d'un parc éolien (100), le programme informatique, quand il est exécuté par une unité de traitement de données, étant adapté pour réguler le procédé selon la revendication 9.

11. Support exploitable par un ordinateur, dans lequel est stocké un programme informatique pour la régulation d'une puissance réactive de sortie d'une pluralité d'éoliennes (105, 106, 107) d'un parc éolien (101), lequel programme informatique, quand il est exécuté par une unité de traitement, étant adapté pour mettre en oeuvre ou réguler un procédé selon la revendication 9.
